(19)
Europäisches
Patentamt

European
Patent Office

Office européen
des brevets

(11) **EP 2 709 310 A1**

(12) **EUROPEAN PATENT APPLICATION**

(43) Date of publication:
**19.03.2014 Bulletin 2014/12**

(51) Int Cl.:
*H04L 12/24* *(2006.01)*      *H04L 12/911* *(2013.01)*
*H04L 12/717* *(2013.01)*

(21) Application number: **12184296.7**

(22) Date of filing: **13.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
 • **Pouyllau, Helia
 91620 Nozay (FR)**

 • **Lamali, Mohamed Lamine
 91620 Nozay (FR)**

(74) Representative: **Lebkiri, Alexandre et al
Cabinet Camus Lebkiri
87 Rue Taitbout
75009 Paris (FR)**

Remarks:
 Amended claims in accordance with Rule 137(2)
 EPC.

(54) **An improved method for maintaining traffic engineering database in a network**

(57)      A Method to update a domain traffic engineering database of a network management element managing the domain characterized in that it comprises the following steps:
- Receiving a failure message related to a network operation,

- Parsing the failure message to extract information related to network links of the domain,
- Updating, in the traffic engineering database, an unavailability probability UAP related to a network link, a network constraint and a period identifier.

EP 2 709 310 A1

**Description**

**FIELD OF THE INVENTION**

The present invention relates to an improved method for maintaining traffic engineering data in a network.

Such a method may be used in any multi-domain network system comprising a plurality of domains, such as, but not exclusively, a plurality of interior gateway protocol (IGP) areas, a plurality of autonomous systems (AS) or a plurality of generalized multiprotocol label switching (GMPLS) architecture overlay networks. For clarity one will speak of administrative domain as a set of network equipments being managed by a same Network Management Equipment (NME). A network equipment is also called a node.

**BACKGROUND OF THE INVENTION**

To set-up a communication service in a network between a transmitting, said source, network equipment and a target router one needs to identify a path between the two said network equipment. Each router, further called node, belongs to an administrative domain or domain. The transmitting domain and receiving domain are the same or not. Most of the time the communication service is bidirectional and might require to meet quality constraints. Those constraints are known as Quality of Service (QoS) defined in SLAs (Service Layer Agreement) commited with customers. The path supporting the communication service is asked by a Path Computation Client (PCC) to a Path Computation Element (PCE) according known protocols as reminded below. Basically a PCC application of the source node asks to a PCE application of the domain to which the source node belongs a path, with or without constraint, to the target node. The PCC receive in return a message containing a path to the target or a NO_PATH message. A message containing a path is a success message, when a NO_PATH message is a failure message. A success message also contains an Explicit Route Object (ERO). An ERO can be used by a reservation protocol such as Resource Reservation Protocol (RSVP), or by a Network Management System (NMS) to set up a Label Switch Path (LSP). Of course this is the simplest case. The source node may ask for multiple path to multiple target with multiple vectors of constraints. But for our present concerns one can reduce our considerations to one single path computation.

A Path Computation Element architecture, according to the Request For Comments 4655 (RFC4655), is defined to support inter-domain path computation under Quality of Service (QoS) constraints where a domain can be a routing area, a routing layer or an Autonomous System. When the source and target node of a path computation request do not belong to the same domain, a sequence of Path Computation Elements (PCE) is involved. The path computation procedure, Backward Recursive Path Computation (BRPC), as defined by RFC5441 supposes that the sequence of PCE is known. Indeed, several RFCs 5088 and 5089 propose extensions to Open Shortest Path First (OSPF) and Intermediate System to Intermediate System (ISIS) to discover PCEs within a routing area. In an inter-AS context, draft-kumaki-pce-bgp-disco-attribute-06.txt is an equivalent proposal using the Internet routing protocol, Bordure Gateway Protocol (BGP).

Then, to perform its path computation, a PCE uses its Traffic Engineering Database (TED) fed by any IGP or other mechanisms as detailed in RFC 4655. When this TED is periodically updated using an IGP, the PCE is said stateful and the guarantees that the reservation process is successful are higher. In here, stateful means that the PCE has exhaustive information on the network elements and links of its domain. A link is a physical connection between two network elements. In here physical means wired or wireless.

A TED comprises data on links such as maximum bandwidth, bandwidth in use, engineering metrics... the enumeration is not exhaustive.

One of the key of success and/or efficiency in path computation is then the maintenance of the TED. There are three main known solutions, disclosed by RFC4655 to achieve this maintenance:

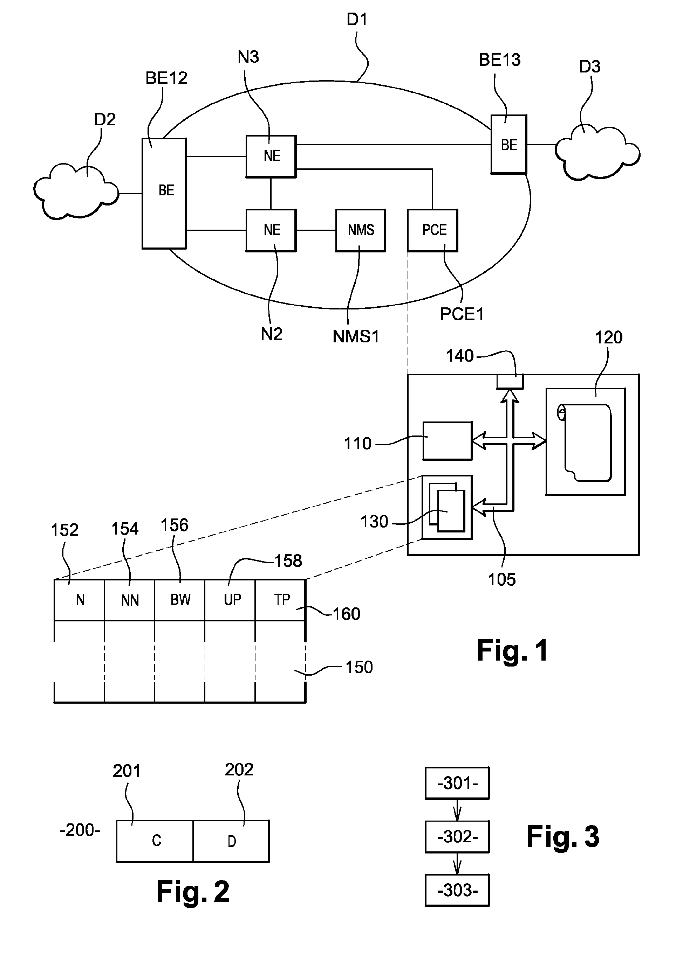

- Participation in IGP distribution of traffic engineering data using extensions as described in RFC3630 and RFC3748. Hence, it supposes that the IGP floods TE information, which is a restrictive context (GMPLS environment). It also might generate numerous messages and requires that the PCE belongs to the routing domain. Figure 1 and 2 provides an illustration of this process with a Node supporting OSPF routing protocol. Figure 2 is an example of code extracted from the Wiki site of CTTC
- Out of band TED synchronization: it evokes some global incremental mechanisms to allow data disclosure from multiple domains
- Configuration: it suggests basically using proprietary mechanisms between a NMS and the PCE to periodically update its TED.

Another alternative is described in draft-lee-pce-ted-alternatives-01.txt: it proposes to use dedicated Publish/Subscribe mechanisms between nodes and PCEs.

Hence, the existing solution is quite restrictive and might generate numerous and frequent messages with very rich information (e.g. LSP state, traffic fluctuation). The frequency of message may increase to significant degree of use of available bandwidth or the information might not be rich enough to guarantee successful reservations. Our invention opts for a lightweight approach.

## SUMMARY OF THE INVENTION

First of all, the invention focuses on the updates traffic engineering databases used, for example, by a PCE. It does not address the problem for a PCE to know the topology: this problem is considered to be solved by RFC 4655 or draft-lee-pce-ted-alternatives-01.txt . This invention addresses the problem for a PCE to have up-to-date information about the state of resources of the network it is aware of. The invention proposes that the entity in charge of the reservation (either a NMS or a node triggering the RSVP-request) reports failures to the PCE responsible of the domain the entity belongs to. With this information, the PCE maintains a TED as follows:

- It identifies the pairs of nodes of the ERO that belongs to the routing domain it is supervising,
- It updates its TED which is defined by at least 4 fields: the Node id, the Next Node id, a network constraint, a probability of unavailability and a time stamp.

To this end the invention as for object a method to update a domain traffic engineering database of a network management element managing the domain characterized in that it comprises the following steps:

- Receiving a report message related to a network operation,
- Parsing the report message to identify and extract information related to network links of the domain,
- Updating, for each extracted link, in the traffic engineering database, at least a probability UAP related to a report nature, a network link, a network constraint and a period identifier.

Beside the main characteristic that have been mentioned in the preceding paragraphs, the method of the invention may have one or more of the following additional characteristics, taken individually or according to any technically possible combinations.

The report nature is in a group made of : success, failure.

Depending on the report nature, the UAP probability is:

- an unavailability probability when the report nature is failure,
- an availability probability when the report nature is success.

The network operation is a reservation attempt.

A link is described by identifier of his extremities.

A network constraint is a minimum bandwidth.

The period identifier is selected with respect to the date of update.

A day is divided into disjoint periods of equal duration or, not equal duration, each period having an identifier, one of them being used in the updating step.

UAP is updated according to following formula :

$$UAP = UAP + \beta * ( 1 - UAP)$$

$\beta$ is greater than 0 but much smaller than 1.

After the updating step, $\beta$ is updated according to formula :

$$\beta = \beta - ( \beta * \beta / ( \beta + 1 ) )$$

After the updating step means after having updated all the links extracted during the parsing step.

To those ends the invention has also for object a digital data storage medium encoding a machine-executable program of instructions to perform the method according to one of the preceding claims.

**BRIEF DESCRIPTION OF THE FIGURE**

The invention will be better understood upon reading the following description and examining the accompanying figures. These are presented for information purposes only and in no way limit the invention. Figures show:

- Figure 1: an illustration of an infrastructure allowing the implementation of the invention.
- Figure 2: an illustration of a failure message.
- Figure 3: an illustration of steps according to the invention.

For clarity, the same or similar elements are identified by identical reference numerals throughout the figures.

**DESCRIPTION OF ONE EMBODIMENT OF THE INVENTION**

Figure 1 shows a domain D1 interconnect to a domain D2 and to a domain D3. It is here reminded that by domain one generalizes the following notions: domain, IGP, AS MPLS, GMPLS. Domain D1, domain D2 and domain D3 are interconnected via border equipments. Domain D1 is connected to domain D2 via a border equipment BE12 of domain D1. Domain D1 is connected to domain D3 via a border equipment BE13 of domain D1. Border equipment BE12 is in fact linked to a border equipment of domain D2 and border equipment BE13 is linked to a border equipment of domain D3. By linked one mean that it exists a link, as yet defined, between the two equipments.

Domain D1 also comprises:

- a path computation element PCE1,
- a network management system NMS1,
- a general node N2 and a general node N3,

Domain D2 also comprises:

- a path computation element PCE2

The real complexity of domain D1, domain D2 and domain D3 is hidden for clarity purposes. The three cited domains, with other, are part of a larger network.

Figure 1 shows, for illustration purposes, that:

- Border equipment BE12 is linked with network equipment N2,
- Border equipment BE12 is linked with network equipment N3,
- Network equipment N2 is linked with network equipment N3,
- Network equipment N2 is linked with network management system NMS1,
- Network equipment N3 is linked with path computation equipment PCE1,
- Network equipment N3 is linked with border equipment BE13.

Those links are part of one call the topology of the domain. It is here reminded that this invention addresses the problem for a PCE to have up-to-date information about the state of resources of the network it is aware of. This invention is applicable to any equipment needing knowledge of state of resource of network.

Figure 1 also shows some details, concerning the invention, of PCE PCE1 implementing the invention by using at least but not only, means shown in figure 1. PCE PCE1 comprises :

- A microprocessor 110,
- A program memory 120,
- A data memory 130,
- A connection interface 140.

The microprocessor 110, program memory 120, data memory 130 and connection interface 140 are interconnected by a bus 105. When PCE PCE1 acts, this means that the microprocessor 110 executes some instruction codes registered in program memory 120. Program memory 120 comprises, at least but not only, instruction codes corresponding to the steps of the invention. Messages transmitted and received by PCE PCE1 transit via the interface 140 according to known protocols, for example Internet Protocol. This is a general architecture for the equipment of a network. The program memory 120 is loaded from a data storage device or is a data storage device.

For the needs of the invention data memory 130 is structured to store the needed and produced data. These data may be stored as flat table, object database or hierarchic data. This is not a key point for the invention. In this description one considers flat tables such as existed in relational databases. Figure 1 show a table 150 stored in data memory 130. More generally table 150 is a storage for constrained link unavailability objects. Table 150 comprises the following columns:

- Column 152 storing an identifier of a source node,
- Column 154 storing an identifier of a next node that is not source node,
- Column 156 storing a network constraint, in our example a minimum bandwidth,
- Column 158 storing a probability, in this embodiment let's consider that it is an unavailability probability,
- Column 160 storing a time period identifier.

The columns store properties of constrained link unavailability objects. The properties are related because they belong to the same sequence of constrained link unavailability object. In the described embodiment one can say the properties are related because they belong to the same row. A row is also called a record. In here a row of table 150 is the materialization of a constrained link unavailability object. In such an object the identifier of a source node and the identifier of a next node identify a link by identifying the extremities of the link.

An identifier of a node is, for example, an address according to Internet Protocol version 4 or version 6. In other embodiments it should be any value identifying with no ambiguity the device.

In another embodiment of the invention, a network constraint should be a maximum latency, an encryption capability... the enumeration is not exhaustive.

Depending of embodiment, a time identifier may be :

- A number between 0 and 23 to identify an hour in the day,
- A number between 0 and 1439 to identify a minute in the day,
- A number between 0 and 95 to identify a quarter of hour in the day,
- A number between 0 and 3 to identify a range of 8 hours in the day,
- A number between 0 and 2 to identify, night, morning and afternoon in the day
- ...

The enumeration is not exhaustive. One talk of number but one can use any type of identifier, alphanumerical or others.

The use of the invention requests an update of different equipments and/or processes in the network. For example when the NMS NMS1 receives, for any reason, a RSVP failure message it should, to use the invention, build a failure message to be forwarded to the PCE PCE1 implementing the invention. Such a failure message 200, illustrated by figure 2, comprises at least two fields:

- A code field 201 allowing to identify the message as a report of RSVP action,
- A data field 202 comprising, in this case, an ERO object and requested constraint information.

According to embodiment, the code field is a failure code or a success code. These codes are preferably different to allow the simultaneous implementation of two embodiment that is treating success and failure of network actions. In here we treat the case of a failure code.

The notification to the PCE is achieved using the PCE Communication Protocol (PCECP), and more specifically the notification primitive (PCNtf) [RFC5440] of this protocol. The notification indicates the ERO and the demanded bandwidth, for example 250000. The Notification object of the PCE Communication Protocol is composed of optional TLVs, which in the case of the invention could be used to include an ERO [RFC3209] and a Bandwidth object [RFC5440]. Hence, another object should be defined to indicate that it is a reservation failure.

The message 200 is then forwarded to PCE PCE1 which receives it : this is the first step 301 of the invention. Once the received message has been identified as a failure message according to the invention the PCE PCE1 jump to step 302 of parsing data field 202.

It is known that, basically, an ERO object is a sequence of network equipment identifiers this sequence being a path through a network. It is also known that a PCE knows the topology of the domain he manages. This topology comprises a list of identifiers of network equipments. This list is here called the topology list. In step 302, the PCE PCE1 extracts from the ERO network identifier sequence each network identifier also being in the topology list. It is an intersection operation. For each extracted network equipment identifier in the sequence, the PCE PCE1 also extracts the next identifier in the sequence so to have a link identified by the identifiers of his extremities.

PCE PCE1 also extracts from data field 202 a network constraint value. In our example this network constraint value is the bandwidth claimed by the reservation attempt having raised the failure message. This value is, for example, 25000.

Finally PCE PCE1 computes a period identifier from de reception date of the failure message 200. For example if the embodiment use a division of day in three periods the conversion to a period identifier is made according to the time part of the date and the following table:

| Start time | End time | Period Identifier |
|---|---|---|
| 20h00 | 7h59 | 0 |
| 8h00 | 11h59 | 1 |
| 12h00 | 19h59 | 2 |

At the end of step 302, PCE PCE1 has a list of links LL, a network constraint value NCV and a period identifier PI. PCE PCE1 then runs to step 303 of updating its traffic engineering database.

For each link L in LL PCE PCE1 searches a row in table 150. A row of table 150 matches if all described properties of the row, except column 158, matches:

- L for column 152 and column 154, source node identifier of L must match column 152 and destination/next node of L must match column 154,
- NCV for column 156,
- PI for column 160.

If PCE PCE1 does not find a row then a new row is inserted with the values of L, NCV and PI. The value used in this case for column 158 is an arbitrary selected one, for example 0.3.

If PCE PCE1 finds a row the value of column 158 if updated according to following formula:

$$newValue = oldValue + \beta * ( 1 - oldValue )$$

In this formula $\beta$ is an arbitrary selected value in the interval [0, 1] from which one exclude 0 and 1. In preferred embodiment $\beta$ in nearer of 0 than of 1. For example $\beta$ is 0.02. In an embodiment of the invention the value of $\beta$ changes for each failure message. In yet another embodiment of the invention the value of $\beta$ is a property of the row that is a non-described column of table 150.

In an embodiment of the invention $\beta$ is updated at the end of the updating step, when all extracted links have been updated. For example, $\beta$ is updated according to the following formula:

$$\beta = \beta - ( \beta * \beta / ( \beta + 1 ) )$$

If $\beta$ is stored as a column of table 150 that's mean that each updated rows during the step is updated again for updating the value of $\beta$. In this case updating of unavailability probability and of $\beta$ may be done sequentially.

The invention allows having up to date traffic engineering information in the TED. This up to date information are updated without flooding the network according to event-driven logic: that is the information are updated when it is pertinent to do it.

This up to date information may be use, for example, for path computation. A path computation process, the Backward-Recursive Path Computation (BRPC) procedure as standardized by the IETF in RFC5441 allows for local path computation algorithms and policies. Any PCE equipment using the invention should modify its path-computation policy defining thresholds related to unavailability probability value, over which it proposes a path-segment as response to a request.

In another embodiment of the invention the column 158 stores an availability probability. In this case field 201 comprises a success code the rest of the update process remaining the same. The exploitation of column 158 depends on the report nature of the reports message triggering his update. If they are failure message a selecting process will avoid the greater values of column 158. If they are success message a selecting process will prefer the greater values of column 158.

One will prefer the less verbose embodiment of the invention. That is if failures are less frequent than successes, one will prefer to treat the failure messages and vice versa.

In yet another embodiment of the invention both the success and failure messages are treated. In this case more information is available in table 150 but more bandwidth is used as a report message is sent in every case. In this case one will need another column in table 150. This other column being a sister of column 158, the updated column 158 or said other column depends on the report nature.

**Claims**

1. A Method to update a domain traffic engineering database of a network management element managing the domain **characterized in that** it comprises the following steps:

   - Receiving (301) a report message related to a network operation,
   - Parsing (302) the report message to identify and extract information related to network links of the domain,
   - Updating, for each extracted link, in the traffic engineering database, at least a probability UAP related to a report nature, a network link, a network constraint and a period identifier (160).

2. A method according to claim 1, **characterized in that** the report nature is selected in a group made of: success, failure.

3. A method according to claim 2, **characterized in that** depending on the report nature the UAP probability is:

   - an unavailability probability when the report nature is failure,
   - an availability probability when the report nature is success.

4. A method according to any of preceding claims **characterized in that** the network operation is a reservation attempt.

5. A method according to any of preceding claims, **characterized in that** a link is described by identifiers (152, 154) of his extremities.

6. A method according to any of preceding claims, **characterized in that** a network constraint (156) is a minimum bandwidth.

7. A method according to any of preceding claims, **characterized in that** the period identifier is selected with respect to the date of update.

8. A method according to any of preceding claims, **characterized in that** a day is divided into disjoint periods of equal duration or, not equal duration, each period having an identifier, one of them being used in the updating step.

9. A method according any of the preceding claims, **characterized in that** UAP probability is updated according to following formula:

$$UAP = UAP + \beta * ( 1 - UAP)$$

10. A method according to claim 9, **characterized in that** $\beta$ is greater than 0 but much smaller than 1.

11. A method according to any of claims 9 or 10, **characterized in that** after the updating step, $\beta$ is updated according to formula:

$$\beta = \beta - ( \beta * \beta / ( \beta + 1 ) )$$

12. A method according to claim 12, **characterized in that** after the updating step means after having updated all the links extracted during the parsing step.

13. A digital data storage medium encoding a machine-executable program of instructions to perform the method according to one of the preceding claims.

**Amended claims in accordance with Rule 137(2) EPC.**

**1.** A Method to update a domain traffic engineering database of a network management element managing the domain **characterized in that** it comprises the following steps:

- Receiving (301) a report message related to a network operation, the report having a nature selected in a group made of: success, failure,
- Parsing (302) the report message to identify and extract information related to network links of the domain,
- Updating, for each extracted link, in the traffic engineering database, at least a probability UAP related to a report nature, a network link, a network constraint and a period identifier (160).

**2.** A method according to claim 1, **characterized in that** depending on the report nature the UAP probability is:

- an unavailability probability when the report nature is failure,
- an availability probability when the report nature is success.

**3.** A method according to any of preceding claims **characterized in that** the network operation is a reservation attempt.

**4.** A method according to any of preceding claims, **characterized in that** a link is described by identifiers (152, 154) of his extremities.

**5.** A method according to any of preceding claims, **characterized in that** a network constraint (156) is a minimum bandwidth.

**6.** A method according to any of preceding claims, **characterized in that** the period identifier is selected with respect to the date of update.

**7.** A method according to any of preceding claims, **characterized in that** a day is divided into disjoint periods of equal duration or, not equal duration, each period having an identifier, one of them being used in the updating step.

**8.** A method according any of the preceding claims, **characterized in that** UAP probability is updated according to following formula:

$$UAP = UAP + \beta * ( 1 - UAP)$$

**9.** A method according to claim 9, **characterized in that** $\beta$ is greater than 0 but smaller than 1.

**10.** A method according to any of claims 9 or 10, **characterized in that** after the updating step, $\beta$ is updated according to formula:

$$\beta = \beta - ( \beta * \beta / ( \beta + 1 ) )$$

**11.** A method according to claim 10, **characterized in that** after the updating step means after having updated all the links extracted during the parsing step.

**12.** A digital data storage medium encoding a machine-executable program of instructions to perform the method according to one of the preceding claims.

**Fig. 1**

**Fig. 2**

**Fig. 3**

Europäisches
Patentamt

European
Patent Office

Office européen
des brevets

## EUROPEAN SEARCH REPORT

Application Number

EP 12 18 4296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/153829 A1 (KWON TAEHYUN [KR] ET AL) 23 June 2011 (2011-06-23) | 1,2,4-13 | INV. H04L12/24 |
| A | * paragraphs [0017], [0030] - [0048] * ----- | 3 | ADD. H04L12/911 |
| Y | US 2011/126041 A1 (MATSUBARA DAISUKE [JP]) 26 May 2011 (2011-05-26) | 1,2,4-13 | H04L12/717 |
| A | * paragraphs [0064] - [0067] * ----- | 3 | |
| A | ALESSIO GIORGETTI ET AL: "Path state-based update of PCE traffic engineering database in wavelength switched optical networks", IEEE COMMUNICATIONS LETTERS, IEEE SERVICE CENTER, PISCATAWAY, NJ, US, vol. 14, no. 6, 1 June 2010 (2010-06-01), pages 575-577, XP011310537, ISSN: 1089-7798 * Chapter III. * ----- | 1-13 | |

TECHNICAL FIELDS
SEARCHED      (IPC)

H04L

The present search report has been drawn up for all claims

| Place of search | Date of completion of the search | Examiner |
|---|---|---|
| The Hague | 12 February 2013 | Engmann, Steffen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**ANNEX TO THE EUROPEAN SEARCH REPORT
ON EUROPEAN PATENT APPLICATION NO.**

EP 12 18 4296

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2013

| Patent document cited in search report | | Publication date | Patent family member(s) | | Publication date |
|---|---|---|---|---|---|
| US 2011153829 | A1 | 23-06-2011 | KR<br>US | 20110071543 A<br>2011153829 A1 | 29-06-2011<br>23-06-2011 |
| US 2011126041 | A1 | 26-05-2011 | JP<br>US<br>WO | 5095823 B2<br>2011126041 A1<br>2010018755 A1 | 12-12-2012<br>26-05-2011<br>18-02-2010 |

EPO FORM P0459

For more details about this annex : see Official Journal of the European Patent Office, No. 12/82